(19) **Europäisches Patentamt**

**European Patent Office**

**Office européen des brevets**

(11) **EP 0 696 112 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.⁷: **H04B 7/04**

(21) Anmeldenummer: **95112064.1**

(22) Anmeldetag: **01.08.1995**

(54) **Ortsfeste oder mobile Funkstation für ein SDMA-Mobilfunksystem**

Fixed or mobile radio station for an SDMA-mobile radio system

Station radio fixe ou mobile pour système radio mobile à accès multiple à répartition dans l'espace (AMRE)

(84) Benannte Vertragsstaaten:
**AT BE CH DE ES FR GB IT LI NL SE**

(30) Priorität: **05.08.1994 DE 4427755**

(43) Veröffentlichungstag der Anmeldung:
**07.02.1996 Patentblatt 1996/06**

(73) Patentinhaber:
• **Alcatel SEL Aktiengesellschaft
70435 Stuttgart (DE)**
Benannte Vertragsstaaten:
**DE**
• **ALCATEL N.V.
2288 BH Rijswijk (NL)**
Benannte Vertragsstaaten:
**BE CH ES FR GB IT LI NL SE AT**

(72) Erfinder:
• **Tangemann, Michael
D-71229 Leonberg (DE)**
• **Rheinschmitt, Rupert
D-71254 Ditzingen (DE)**
• **Weis, Bernd X., Dr.
D-70825 Korntal (DE)**

(74) Vertreter: **Knecht, Ulrich Karl, Dipl.-Ing. et al
Alcatel
Intellectual Property Department, Stuttgart
70430 Stuttgart (DE)**

(56) Entgegenhaltungen:
**EP-A- 0 430 481    WO-A-93/12590
US-A- 5 289 499**

**Beschreibung**

Die Erfindung betrifft eine Funkstation für ein SDMA-Mobilfunksystem nach dem Oberbegriff des Anspruchs 1.

Ein SDMA-Mobilfunksystem mit Funkstationen zur SDMA-Funkübertragung (SDMA: Space Division Multiple Access) ist aus der Schrift WO 93/12590, bekannt. Die SDMA-Funkübertragung, bei der durch Strahlbündelung Mehrfachzugriffe auf einen Frequenzkanal möglich sind, wird dort mit folgenden Mitteln durchgeführt:

Die Funkstationen des SDMA-Mobilfunksystems, zumindest die ortsfesten Funkstationen, enthalten zum Senden strahlgebündelter Funksignale auf einer Trägerfrequenz N = 10 Sendezweige mit N HF-Sendestufen, die N Antennenelemente eines Antennen-Arrays mit N komplex gewichteten Sendesignalen speisen. Diese werden aus modulierten Basisbandsignalen erzeugt, indem ein sogenannter "Spatial Multiplexer" der zwischen die HF-Sendestufen und den Modulatoren geschaltet ist, den Betrag und die Phase jedes modulierten Basisbandsignals so ändert, wie dies ein sogenannter "SDMA-Controller" vorgibt. Dieser steuert den "Spatial Multiplexer" über einen sogenannten "SDMA-Processor", um die Strahlbündel bei Standortänderungen der mobilen Funkstationen nachzuführen.

Das Empfangsteil der ortsfesten Funkstation enthält N Empfangszweige zum Empfang von N komplex gewichteten Empfangssignalen, die der Überlagerung von Funksignalen entsprechen, die die mobilen Funkstationen auf einer Trägerfrequenz aus verschiedenen Richtungen senden. Weiterhin enthält die ortsfeste Funkstation einen sogenannten "Spatial Demultiplexer", der den Demodulatoren vorgeschaltet ist und der aus den N Empfangssignalen durch komplexe Gewichtung zu demodulierende Basisbandsignale bildet.

Demnach enthält dieses bekannte SDMA-Mobilfunksystem Funkstationen, die zur SDMA-Funkübertragung aufwendig aufgebaute Signalverarbeitungsstufen, die sogenannten "Spatial Multiplexers" und "Spatial Demultiplexers", benötigen.

Weiter ist aus dem US-Patent 5,289,499 bekannt, die hierfür erforderliche Signalaufbereitung weitgehend in Basis- oder ZF-Lage durchzuführen.

Aufgabe der Erfindung ist es, die für die SDMA-Funkübertragung typische Mehrfachausnutzung der Frequenzen weiter zu fördern.

Gelöst wird die Aufgabe durch eine Funkstation mit den Merkmalen des Anspruchs 1.

Demnach enthält das Mobilfunksystem Funkstationen, insbesondere ortsfeste Funkstationen, die mindestens zwei modulierte Funksignale zeitgleich auf einer Trägerfrequenz in unterschiedliche Richtungen abstrahlt.

Vorteilhafte Ausgestaltungen der Erfindung sind den Unteransprüchen zu entnehmen.

Es folgt eine genaue Beschreibung der Erfindung anhand von drei Ausführungsbeispielen und unter Zuhilfenahme folgender Zeichnungen:

Fig. 1 die schematisch das Sendeteil einer (mobilen oder ortsfesten) Funkstation zeigt, die ein Funksignal gerichtet abstrahlt;

Fig. 2 die Zeitverläufe von Phasenverschiebungen und Amplitudengewichtungen für ein zu sendendes TDMA-Funksignal und für dessen Abstrahlrichtung zeigt;

Fig. 3 die das Blockschaltbild einer ortsfesten Funkstation zeigt, die mindestens zwei Funksignale gerichtet abstrahlt;

Fig. 4 die ein SDMA-Mobilfunksystems mit einer im Blockschaltbild dargestellten ortsfesten Funkstation zeigt;

Fig. 5 die schematisch eine Vorrichtung zur komplexen Gewichtung von I/Q-modulierten Signalen zeigt und

Fig. 6 die das Blockschaltbild einer ortsfesten Funkstation mit solchen Vorrichtungen zur komplexen Gewichtung in den Sendezweigen zeigt.

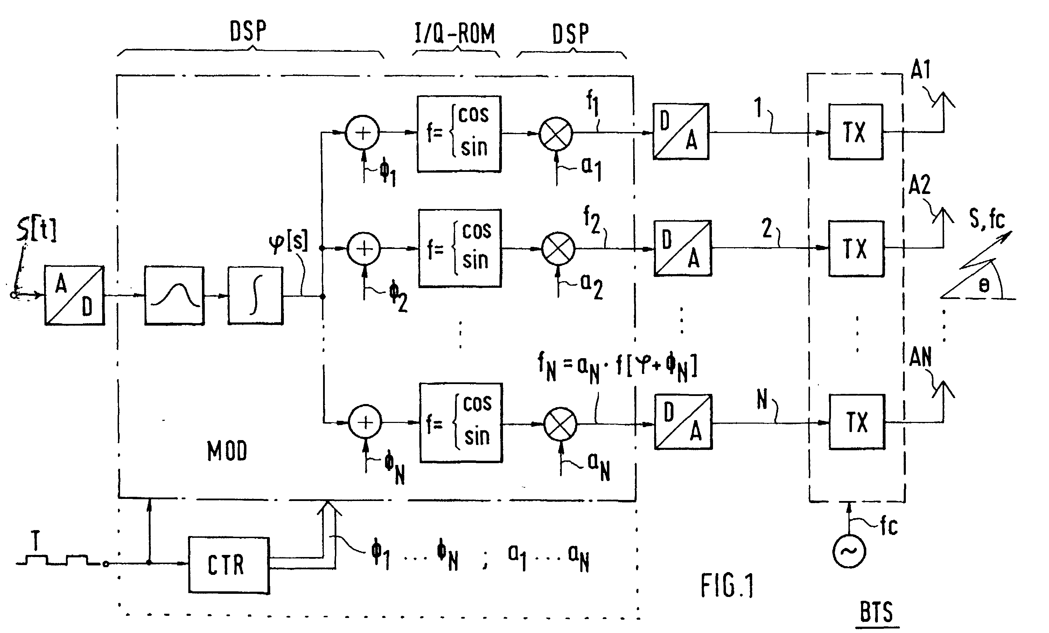

Fig. 1 zeigt das Sendeteil einer Funkstation BTS nach dem Stand der Technik die über N Antennenelemente A1, A2 bis AN einer Antennenanordnung N komplex gewichtete Sendesignale auf einer Trägerfrequenz fc abstrahlt. Durch die komplexe Gewichtung überlagern sich die Sendesignale zu einem Funksignal S, das sich von der Antennenanordnung, die hier eine lineare Gruppenantenne ist, in eine Richtung $\Theta$ ausbreitet. Die in Fig. 1 gezeigte Ausführungsform ist auf das Senden eines Funksignales beschränkt, um ein erstes Beispiel zu beschreiben, das gleichermaßen für eine mobile wie auch für eine ortsfeste Funkstation gilt und das die Erfindung sehr deutlich zeigt. Im weiteren wird von einer ortsfesten Funkstation BTS ausgegangen, die das Funksignal S als TDMA-Funksignal in eine sich von Zeitschlitz zu Zeitschlitz ändernde Richtung $\Theta$ abstrahlt. Somit ist die in Fig. 1 gezeigte ortsfeste Funkstation BTS etwa für eine TDMA-Funkübertragung nach dem GSM-Standard (GSM: Global System for Mobile Communications) geeignet.

Die Funkstation BTS nach Fig. 1 enthält eine Steuerschaltung CTR und eine damit verbundene Modulationsstufe MOD zur Erzeugung von N komplex gewichteten Sendesignalen $f_1$, $f_2$ bis $f_N$ mittels digitaler Phasenmodulation und N-facher komplexen Gewichtung eines Nutzsignales S[t]. Weiterhin enthält die Funkstation BTS N HF-Sendestufen TX, die der Modulationsstufe MOD nachgeschaltet sind und die jeweils eines der N Sendesignale auf die Trägerfrequenz fc = 935 MHz umsetzen und zur Einspeisung in N Antennenelmente verstärken. Zur Steuerung der N-fachen komplexen Gewichtungen gibt die Steuerschaltung CTR über einen Datenbus der Modulationsstufe MOD im Takt T der digitalen Phasenmodulation N Phasenverschiebungen $\phi_1$, ... $\phi_N$ und N Amplitudenwichtungen $a_1$, ..., $a_N$ vor.

Diese Phasenverschiebungen und Amplitudenwichtungen sind die komplexen Gewichte für die N Sendesignale und prägen das Richtdiagramm der Gruppenantenne. Auf die Berechnung der komplexen Gewichte wird hier nicht näher eingegangen. Sie kann beispielsweise so erfolgen, wie in WO 93/12590 beschrieben.

Die hier gezeigte Modulationsstufe MOD enthält einen digitalen Signalprozessor DSP und einen Festwertspeicher I/Q-ROM, mittels denen er die Inphase und Quadraturkomponenten der N Sendesignale wie folgt erzeugt:

Aus den Abtastwerten des Nutzsignales S[t] leitet der digitale Signalprozessor DSP mittels Filterung und Integration ein modulierendes Signal $\varphi[s]$ für eine GMSK-Modulation (GMSK: Gaussian Minimum Shift Keying) ab.

Das modulierende Signal gibt demnach den Verlauf eines Phasenwinkels $\varphi[s]$ an. Der digitale Signalprozessor errechnet fortlaufend für jeden der N Sendezweige durch binäre Addition des Phasenwinkels $\varphi[s]$ und einer der N Phasenverschiebungen $\phi_1$ bis $\phi_N$ eine Summe als Eingangswert (Adresse) für den Festwertspeicher I/Q-ROM. Dieser enthält Kennlinienwerte von sin- und cos-Funktionen zur Generierung der Inphase- und Quadraturkomponenten der N Sendesignale. Der digitale Signalprozessor erzeugt durch Bitschieben der Ausgangswerte des Festwertspeichers eine Betragsänderung eines jeden der N Sendesignale entsprechend der jeweils vorgegebenen Amplitudengewichtung. Somit wird etwa für den ersten der N Sendezweige das komplex gewichtete Sendesignal $f_1$ erzeugt mit der Inphasekomponente $a_1 \cdot \sin [\varphi + \phi_1]$ und mit der Quadraturkomponente $a_1 \cdot \cos [\varphi + \phi_1]$, wobei $a_1$ der Betrag und $\phi_1$ die Phase des komplexen Gewichtes sind.

Für jeden der N Sendezweige gibt die Steuerschaltung ein komplexes Gewicht vor, so daß die N Sendesignale nach Aussenden über die N Antennenelemente A1 bis AN interferieren und sich zu dem Funksignal S mit der Trägerfrequenz fc in einer Richtung $\Theta$ überlagern. Das Strahlungsdiagramm der Antennenanordnung ist durch die komplexen Gewichte mit den Amplitudengewichtungen $a_1$ bis $a_n$ und mit den Phasenverschiebungen $\phi_1$ bis $\phi_N$ bestimmt.

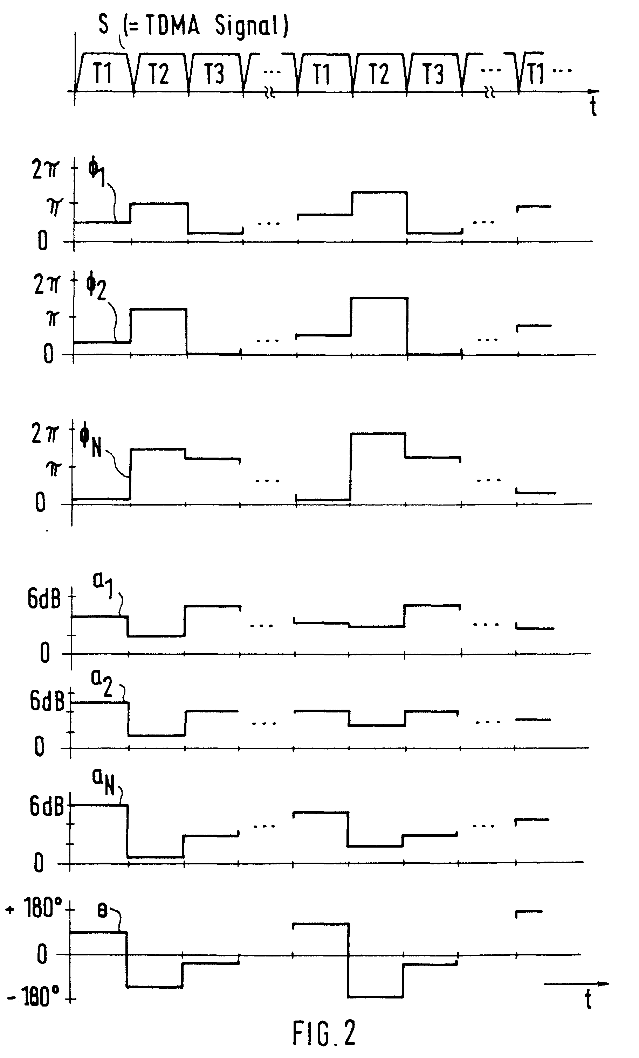

In diesem Beispiel sind das Nutzsignal S[t] und das damit modulierte Funksignal S TDMA-Signale, wie in Fig. 2 dargestellt. Die Steuerschaltung CTR gibt für jeden Zeitschlitz T1, T2, T3, ... des TDMA-Rahmens N komplexe Gewichte vor, so daß sich die Richtung $\Theta$ des Funksignals von Zeitschlitz zu Zeitschlitz ändern kann, je nachdem wo sich die mobilen Funkstationen die nacheinander auf diese Zeitschlitze Zugriff haben, befinden.

Das anhand der Fig. 1 und 2 beschriebene Prinzip einer SDMA-Signalaufbereitung für die Senderichtung ist für einen Fachmann leicht auf eine Anwendung für die Empfangsrichtung übertragbar.

Im folgenden wird das Ausführungsbeispiel einer ortsfesten Funkstation beschrieben, die nach diesem Prinzip mindestens zwei Funksignale auf einer Trägerfrequenz in verschiedene Richtungen aussendet, was einer SDMA-Funkübertragung zur Mehrfachnutzung der Frequenzen entspricht.

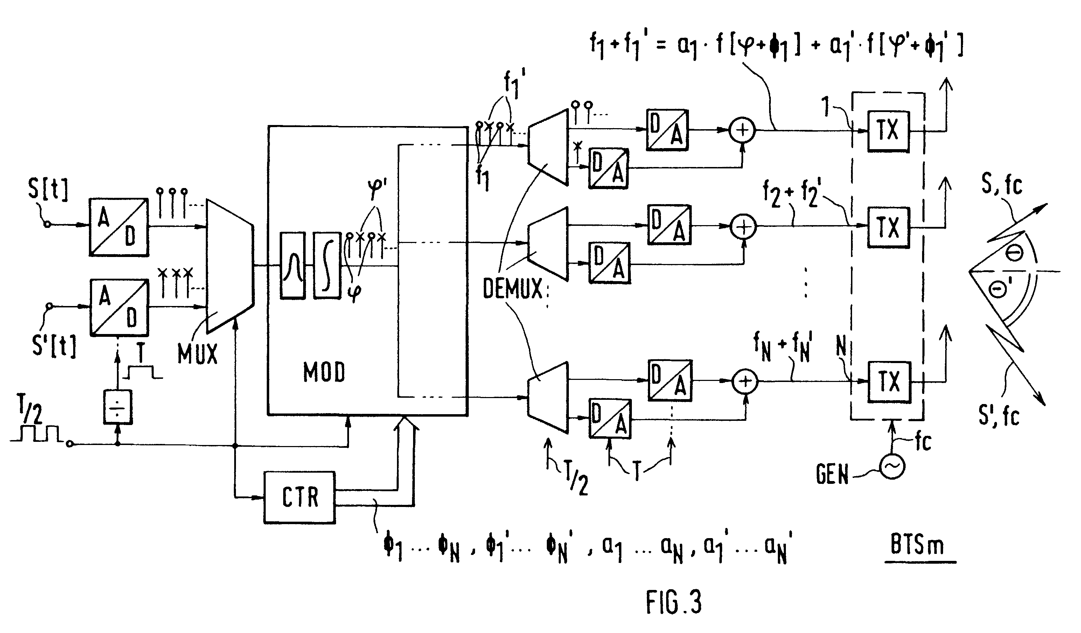

In Fig. 3 ist schematisch der Sender einer ortsfesten Funkstation BTSm für ein SDMA-Mobilfunksystem dargestellt. Diese Funkstation BTSm enthält vergleichbar zu jener nach Fig. 1 eine Modulationsstufe MOD, eine diese steuernde Steuerschaltung CTR und N HF-Sendestufen mit einer nachgeschalteten Gruppenantenne. Weiterhin enthält diese Funkstation BTSm eine der Modulationsstufe MOD vorgeschaltete Zeitmultiplexstufe MUX, die zwei Nutzsignale S[t] und S'[t] der Modulationsstufe MOD zur Modulation und zur komplexen Wichtung zuführt. Die Modulationsstufe erzeugt nach dem bereits beschriebenen Prinzip für jeden der N Sendezweige 1 bis N ein I/Q-Signal. In diesem Beispiel wird für jede I/Q-Komponente ein Multiplexsignal erzeugt, das der Verschachtelung zweier Teilsignale $f_i$ und $f_i'$ entspricht, die die Modulationsstufe mittels der zwei Nutzsignale S und S' erzeugt. Eine in jedem Sendezweig vorhandene Kettenschaltung aus einem Demultiplexer DEMUX, zwei Digital-Analog-Umsetzern und einem Addierer bilden aus dem jeweiligen Multiplexsignal ein analoges Sendesignal, das der Summe der beiden analogen Teilsignale entspricht. Für z.B. den ersten Sendezweig 1 erzeugt die Schaltung nach Fig. 3 ein Sendesignal $f_1 + f_1'$ mit der Inphasekomponente:

$$a_1 \cdot \cos [\varphi + \phi_1] + a_1' \cdot \cos [\varphi' + \phi_1']$$

und mit der Quadraturkomponente:

$$a_1 \cdot \sin [\varphi + \phi_1] + a_1' \cdot \sin [\varphi' + \phi_1'].$$

Das erste Teilsignal, das mit dem Nutzsignal S[t] moduliert wird, ist mit der Amplitudengewichtung $a_1$ und der Phasenverschiebung $\phi_1$ komplex gewichtet. Das zweite Teilsignal, das mittels dem Nutzsignal S'[t] moduliert wird, ist entsprechend mit $a_1'$ und $\phi_1'$ komplex gewichtet.

Für jeden der Sendezweige 1 bis N gibt die Steuerschaltung CTR die komplexen Gewichte so vor, daß die HF-Sendestufen TX über die Gruppenantenne auf der Trägerfrequenz fc N Sendesignale senden, die sich aus $2 \cdot N$ komplex gewichteten Teilsignalen zusammensetzen. Diese $2 \cdot N$ Teilsignale überlagern sich so, daß die Gruppenantenne 2 Funksignale S und S' in unterschiedliche Richtungen $\Theta$ und $\Theta'$ abstrahlt. Da hier

die Funksignale TDMA-Signale sind, gibt die Steuerschaltung CTR die komplexen Gewichte für jeden TDMA-Zeitschlitz neu vor. Die Abstrahlrichtungen Θ und Θ' der Funksignale werden durch Strahlschwenkung auf die sich bewegenden Gegenstationen (hier die mobilen Funkstationen) ausgerichtet, indem die Steuerschaltung die komplexen Gewichte im Zeitabstand einer TDMA-Zeitrahmendauer aufgrund von Empfangssignalauswertungen neu berechnet.

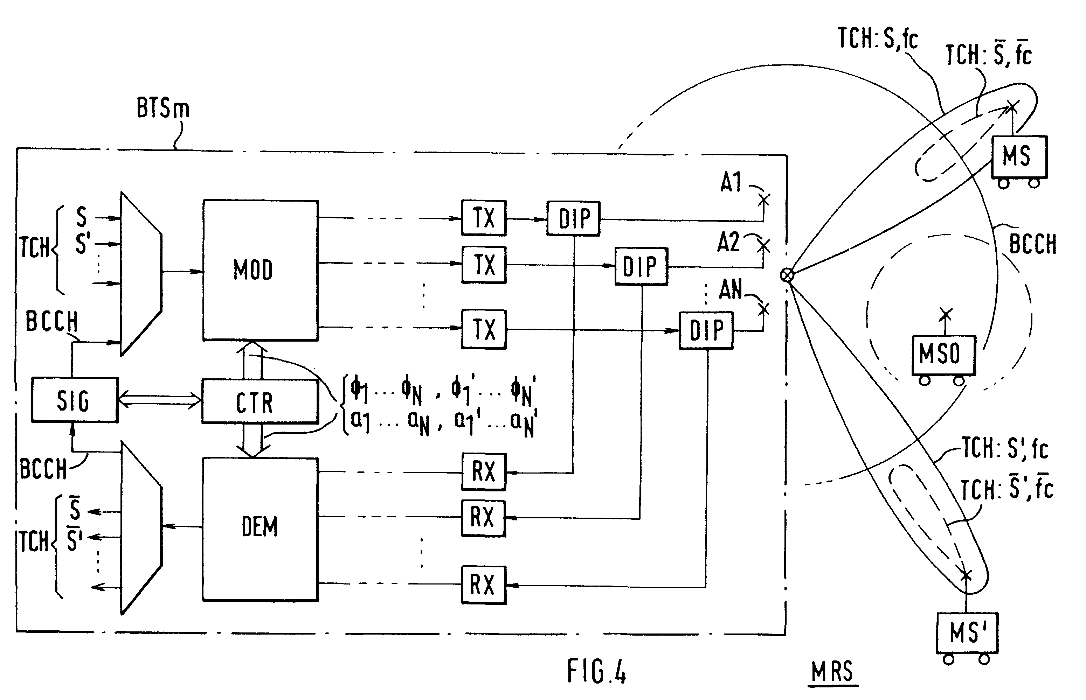

Fig. 4 zeigt schematisch den Aufbau des Senders und des Empfängers der ortsfesten Funkstation BTSm, für den Einsatz in einem SDMA-Mobilfunksystem MRS. Die ortsfeste Funkstation BTSm steht mit zwei mobilen Funkstationen MS und MS' über Verkehrskanäle TCH in Funkverbindung. Dazu sendet die ortsfeste Funkstation BTSm auf einer Trägerfrequenz fc = 935 MHz ein Funksignal S in die Richtung der einen und ein Funksignal S' in die Richtung der anderen mobilen Funkstation. Die mobilen Funkstationen MS und MS' wiederum senden auf einer Trägerfrequenz fc = 980 MHz zur ortsfesten Funkstation BTSm jeweils ein Funksignal S oder S'. Weiterhin sendet die ortsfeste Funkstation über einen Organisationskanal BCCH ungerichtete Funksignale, die mobile Funkstationen vor einem Verbindungsaufbau abhören. In Fig. 4 ist eine mobile Funkstation MSO dargestellt, deren Empfänger diesen Organisationskanal BCCH überwacht. Hat die mobile Funkstation etwa eine zirkulare Gruppenantenne, so wird dazu durch eine symmetrische komplexe Gewichtung vorgegeben, die ein Empfangsdiagramm mit Rundstrahlcharakteristik erzeugt.

Der Aufbau und die Arbeitsweise der ortsfesten Funkstation BTSm nach Fig. 4 wird im folgenden beschrieben:

Im Sendeteil werden Nutzsignale S, S' und Steuersignale über eine Zeitmultiplexstufe auf eine Modulationsstufe geführt, die nach dem beschriebenen Prinzip komplex gewichtete Sendesignale für die Sendezweige erzeugt, die N Antennenelemente A1 bis AN einer Gruppenantenne speisen. Jeder Sendezweig enthält dazu eine (nicht dargestellte) Demultiplexstufe mit nachgeschalteten D/A-Umsetzern und einem Addierer, eine HF-Sendestufe TX und einen Diplexer DIP.

Zum Empfang ist den Diplexern DIP ein Empfangsteil nachgeschaltet, das N HF-Empfangsstufen RX, eine Demodulationsstufe DEM und einen Demultiplexer enthält.

Das Empfangsteil arbeitet nach demselben Prinzip wie das Sendeteil, d.h. die komplexe Gewichtung zur Prägung des Antennendiagramms erfolgt nun in der Demodulationsstufe DEM. Dazu steuert eine Steuerschaltung CTR auch die Demodulationsstufe, indem sie die komplexen Gewichte ($\phi$1, ..., $\phi$N), (a1, ..., aN) zum "Entwichten" der Empfangssignale vorgibt. Die Berechnung der komplexen Gewichte führt die Steuerschaltung CTR anhand einer Auswertung der Empfangssignale wie folgt durch: Während die Demodulationsstufe DEM in den N Empfangszweigen die Trainingssequenz in jeweiligen Empfangssignal detektiert, vergleicht die Steuerschaltung CTR Amplitudenpegel und Phasenlagen der N Empfangssignale, um die komplexen Gewichte und damit die Empfangsrichtung zu bestimmen.

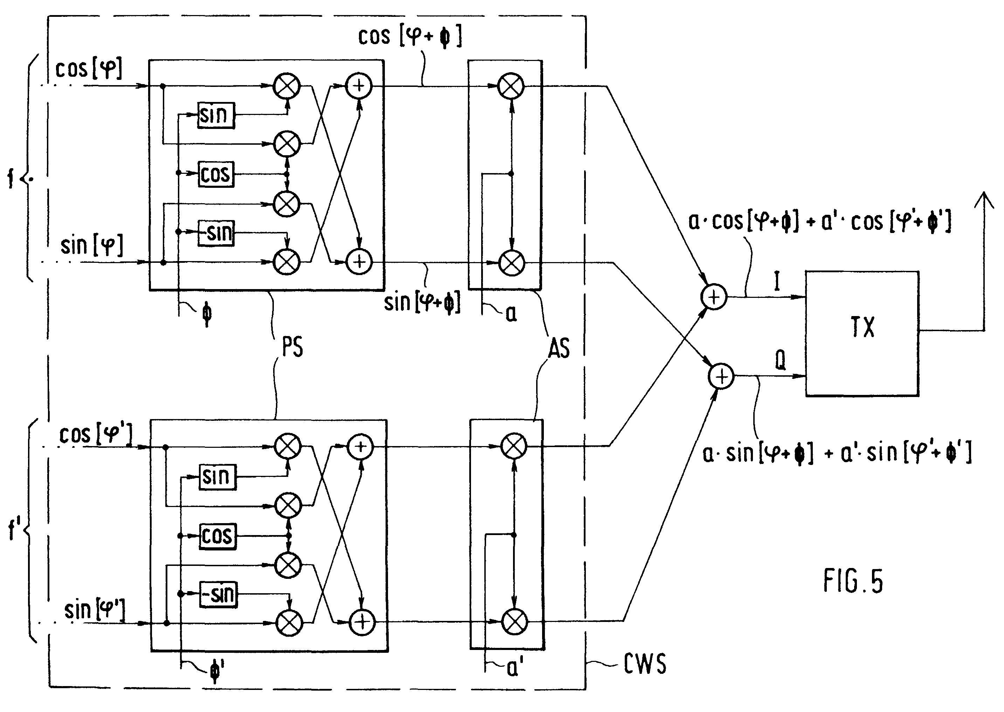

In Fig. 5 ist eine Vorrichtung CWS dargestellt, die winkelmodulierte Signale f und f', die jeweils in eine Inphasekomponente cos [φ] bzw. cos [φ'] und in eine Quadraturkomponente sin [φ] bzw. sind [φ'] aufgeteilt sind, komplex gewichtet. Die einfach aufgebaute Vorrichtung CWS ist in einem Sendezweig wie auch in einem Empfangszweig einsetzbar, indem man sie einem I/Q-Modulator nachschaltet bzw. einem I/Q-Demodulator vorschaltet. Die Vorrichtung eignet sich besonders dann, wenn Sendesignale oder Empfangssignale ohne Eingriff in die Modulation bzw. Demodulation in ZF-Lage gewichtet werden sollen.

Fig. 5 zeigt schematisch eine Schaltung zur komplexen Gewichtung der Sendesignale in einem der Sendezweige einer SDMA-Funkstation. Die Schaltung enthält die Vorrichtung CWS, die die Quadraturkomponenten der zwei zu sendenden, winkelmodulierten Signalen f und f' komplex gewichtet. Der Vorrichtung CWS sind zwei Addierer nachgeschaltet, von denen der eine die komplex gewichteten Inphasekomponenten und der andere die Quadraturkomponenten addiert. Dem Addierer ist eine HF-Sendestufe TX nachgeschaltet, die die superponierten Sendesignale in ein Antennenelement einer Gruppenantenne einspeist. Die Vorrichtung CWS enthält jeweils zur komplexen Gewichtung eines der Signale eine I/Q-Phasenverschiebungsstufe PS und eine I/Q Amplitudengewichtungsstufe AS. Im folgenden wird am Beispiel der komplexen Gewichtung des Signals f die Arbeitsweise der Vorrichtung CWS beschrieben:

Die Quadraturkomponenten cos [φ] und sin [φ] werden um eine Phasenverschiebung $\phi$ in der I/Q-Phasenverschiebungsstufe PS verändert. Dazu enthält diese Funktionsgeneratoren zur Bildung von harmonischen Funktionen sin [$\phi$], cos [$\phi$] und - sin [$\phi$], Mischer zur Multiplikation der Quadraturkomponenten mit den harmonischen Funktionen und Addierer zur Addition verschiedener Mischprodukte nach folgenden Additionstheoremen:

$$1) \cos [\varphi + \phi] = \cos [\varphi] \cdot \cos [\phi] + \sin [\varphi] \cdot (- \sin [\phi])$$

$$2) \sin [\varphi + \phi] = \sin [\varphi] \cdot \cos [\phi] + \cos [\varphi] \cdot \sin [\phi]$$

Demnach erzeugt die I/Q-Phasenverschiebungsstufe PS die phasenverschobenen Quadraturkomponenten cos [φ + $\phi$] und sin [φ + $\phi$]. Diese werden anschließend in der Amplitudengewichtungsstufe AS mit dem Betrag a gewichtet und als Ausgangssignale der Vorrichtung CWS auf jeweils einen der Addierer geführt. Am Ausgang des einen Addierers liegt die Inphasekomponente I des Sendesignals, die der Summe der zwei komplex gewichteten Inphasekomponenten entspricht:

$$I = a \cdot \cos[\varphi + \phi] + a' \cdot \cos[\varphi' + \phi'].$$

Am Ausgang des anderen Addierers liegt die Quadarturkomponente Q des Sendesignals:

$$Q = a \cdot \sin[\varphi + \phi] + a' \cdot \sin[\varphi' + \phi'].$$

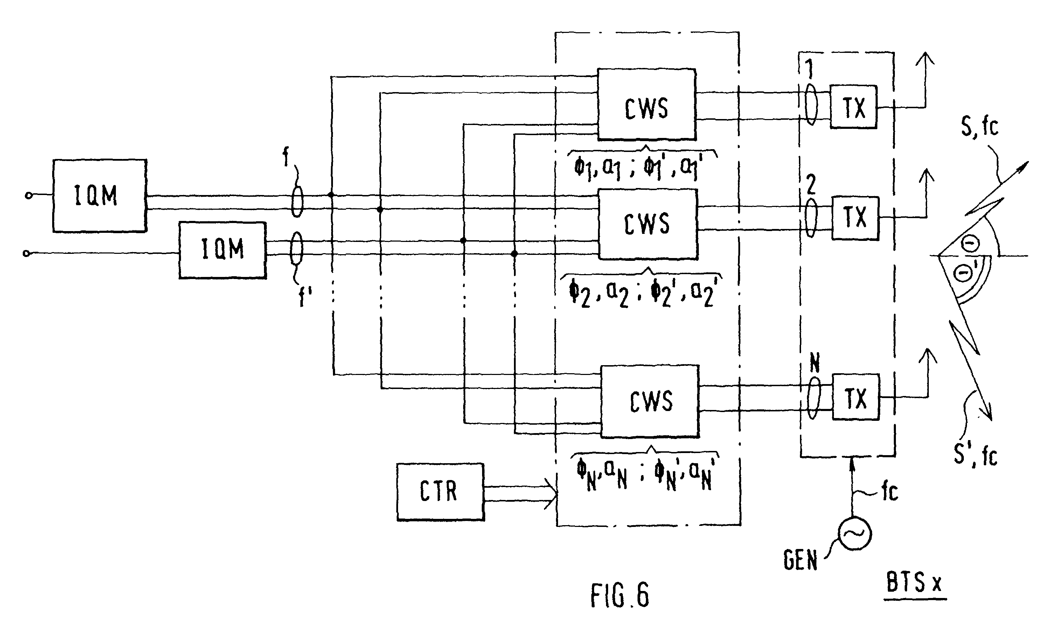

Die in Fig. 5 gezeigte Vorrichtung CWS ist auch zur komplexen Gewichtung von winkelmodulierten Empfangssignalen geeignet, um diese für die Demodulation aufzubereiten. Unter Winkelmodulation werden hier alle Modulationsarten verstanden, bei denen der Signalinhalt durch eine Phasenlage, eine Phasendifferenz oder eine Phasenänderung, wie etwa PSK, GMSK bzw. FM, bestimmt wird. Mit der beschriebenen Schaltung nach Fig. 5 kann sehr einfach eine SDMA-Funkstation aufgebaut werden. Dies wird am Beispiel des Sendeteils einer ortsfesten Funkstation BTSx nach Fig. 6 beschrieben:

Die ortsfeste Funkstation BTSx enthält zwei I/Q-Modulatoren IQM, die jeweils aus einem Nutzsignal S bzw. S' ein GMSK-moduliertes Signal f bzw. f' erzeugen. Weiterhin enthält die ortsfeste Funkstation BTSx N Sendezweige mit jeweils einer Vorrichtung CWS, die die Signale f und f' komplex gewichtet, und mit jeweils einer HF-Sendestufe TX, die ein Antennenelement einer Gruppenantenne speist.

Die Vorrichtungen CWS erzeugen nach dem bereits beschriebenen Prinzip aus den modulierten Signalen f und f' die komplex gewichteten Sendesignale für die N Sendezweige. Dazu steuert eine Steuerschaltung CTR die Vorrichtungen CWS, indem sie für jeden Sendezweig zwei komplexe Gewichte, d.h. die Amplitudengewichtungen $a_j$ und $a_j'$ sowie die Phasenverschiebungen $\phi_j$ und $\phi_j'$ zur Gewichtung der zwei modulierten Signale f und f' vorgibt. Die gezeigte ortsfeste Funkstation BTSx sendet zwei entsprechend modulierte Funksignale S und S' auf einer Trägerfrequenz fc in unterschiedliche und durch die komplexen Gewichte festgelegten Richtungen Θ und Θ'. Um einen kohärenten Betrieb der HF-Sendestufen TX sicherzustellen, enthält die Funkstation BTSx einen Frequenzgenerator GEN der die Trägerfrequenz fc erzeugt, und HF-Leitungen, über die das Trägersignal den HF-Sendestufen TX zugeführt wird. Die Leitungslängen sind so aufeinander abgestimmt, daß das Trägersignal an den Eingängen der HF-Sendestufen in derselben Phasenlage eintrifft. Die Abstimmung der Leitungslängen kann auch elektronisch, etwa durch Einsatz von Phasenschiebern durchgeführt werden.

Die Erfindung wurde anhand von besonders vorteilhaften Ausführungsbeispielen für ortsfeste Funkstationen beschrieben. Die Anwendung der Erfindung bei mobilen Funkstationen, wie etwa Mobilstationen für Kraftfahrzeuge oder Handfunktelefone, ist ohne Einschränkung möglich. Weiterhin ist die Erfindung in digitalen wie auch in analogen Mobilfunksystemen anwendbar. Diese können öffentlichen Netzen zugeordnet sein, wie etwa GSM oder DECT (Digital European Cordless Telephone), oder können nicht-öffentlichen Netzen zugeordnet sein, wie etwa TETRA (Transeuropean Trunked Radio).

**Patentansprüche**

1. Funkstation (BTS, BTSm, MS) für ein SDMA-Mobilfunksystem, die zur Erzeugung von N komplex gewichteten Sendesignalen N Sendezweige (1, 2, ..., N; N ist eine natürliche Zahl) mit N HF-Sendestufen (TX) enthält, die N Antennenelemente (A1, ..., AN) einer Antennenanordnung (Antennen-Array) mit den N komplex gewichteten Sendesignalen speisen, damit die Funkstation mindestens ein Funksignal (S) gerichtet abstrahlt, mit einer Modulationsstufe (MOD), in der in Basisband- oder ZF-Lage die Modulation und zumindest ein Teil der komplexen Gewichtung der Sendesignale erfolgt, **dadurch gekennzeichnet, daß** die Funkstation mindestens zwei modulierte Funksignale (S, S') zeitgleich auf einer Trägerfrequenz (fc) in unterschiedliche Richtungen (θ, θ') abstrahlt, daß die ortsfeste Funkstation (BTSm) eine Zeitmultiplexstufe (MUX) enthält, die der Modulationsstufe (MOD) vorgeschaltet ist und die dieser zur Modulation mindestens zwei digitale Nutzsignale (S[t], S'[t]) oder daraus abgeleitete modulierende Signale (φ, φ') zuführt, und daß die ortsfeste Funkstation (BTSm) N Demultiplexstufen (DEMUX) und N Addierer enthält, die der Modulationsstufe (MOD) nachgeschaltet sind, so daß für die N Sendezweige (1, ..., N) N Sendesignale erzeugt werden, die jeweils einem Summensignal entsprechen, das mindestens zwei komplex gewichtete Teilsignale (f1 + f1') enthält.

2. Funkstation (BTS, BTSm; MS) nach Anspruch 1, **dadurch gekennzeichnet, daß** die Funkstation eine Steuerschaltung (CTR) enthält, die mit der Modulationsstufe (MOD) verbunden ist und die diese zur komplexen Gewichtung der N Sendesignale (f1, ..., fN) steuert, indem sie für ein modulierendes Signal (b[s]), das die Modulationsstufe (MOD) den N Sendesignalen aufprägt, N Phasenverschiebungen (φ1, ..., φN) und/oder N Amplitudengewichtungen (a1, ..., aN) vorgibt.

3. Funkstation (BTS) nach Anspruch 2, **dadurch gekennzeichnet, daß** das modulierende Signal den Verlauf eines Phasenwinkels (φ[S]) angibt, daß die Modulationsstufe (MOD) das modulierende Signal auf die N Sendezweige (1, 2, ..., N) verzweigt, und daß die Steuerschaltung (CTR) für jeden der Sendezweige innerhalb der Modulationsstufe (MOD) eine Änderung des Phasenwinkels (φ[S]) um eine der N vorgegebenen Phasenverschiebungen ([φ1, ..., φN]) steuert, damit die Funkstation (BTS) ein winkelmoduliertes Funksignal (S) in eine Richtung (R) abstrahlt.

4. Funkstation (BTS) nach Anspruch 2, **dadurch gekennzeichnet, daß** das modulierende Signal den Verlauf einer Amplitude angibt, daß die Modulationsstufe das modulierende Signal auf die N Sendezweige verzweigt, und daß die Steuerschaltung für jeden der Sendezweige innerhalb der Modulationsstufe eine Gewichtung der Amplitude mit einer der N vorgegebenen Amplitudenwichtungen steuert, damit die Funkstation ein amplitudenmoduliertes Funksignal in eine Richtung abstrahlt.

5. Funkstation (BTS) nach Anspruch 3 oder 4, **dadurch gekennzeichnet, daß** die Modulationsstufe (MOD) einen digitalen Signalprozessor (DSP) enthält, der mit der Steuerschaltung (CTR) verbunden ist und der für jeden der N Sendezweige (1, ..., N) zu dem Phasenwinkel (φ[S]) eine der N Phasenverschiebung (φ1, ..., φN) binär addiert bzw. der die Amplitude durch Bitschieben mit einer der N Amplitudengewichtungen gewichtet.

6. Funkstation (BTS) nach Anspruch 2, **dadurch gekennzeichnet, daß** die Modulationsstufe (MOD) das modulierende Signal (φ[S]) von einem TDMA-Nutzsignal (S[t]) ableitet, das K Zeitschlitze (T1, T2, ...) hat, und daß die Steuerschaltung (CTR) für jeden der Zeitschlitze (T1, T2, ...) die N Phasenverschiebungen (φ1, ..., φN) und/oder die N Amplitudengewichtungen (a1, ..., aN) so vorgibt, daß die Funkstation ein TDMA-Funksignal (S) in eine von Zeitschlitz zu Zeitschlitz veränderbare Richtung (R) abstrahlt.

7. Funkstation (BTSm) nach Anspruch 1, **dadurch gekennzeichnet, daß** die Steuerschaltung (CTR) zum Aufbau einer gerichteten Funkverbindung mit einer anderen Funkstation (MSO) die komplexe Gewichtung so steuert, daß die Antennenanordnung mit einer Rundstrahlcharakteristik sendet.

8. Funkstation (BTS) nach Anspruch 1, **gekennzeichnet durch** einen Trägerfrequenzgenerator (GEN), der mit den N HF-Sendestufen (TX) über ein solches Verteilnetz verbunden ist, das unterschiedliche Signallaufzeiten für eine taktsynchrone und phasengleiche Trägerfrequenzversorgung ausgleicht.

**Claims**

1. Radio station (BTS, BTSm, MS) for an SDMA mobile radio system, which radio station, for the purpose of generating N complexly weighted transmit signals, contains N transmit branches (1, 2, ..., N; N is a natural number) having N RF transmit stages (TX), which supply the N antenna elements (A1, ..., AN) of an antenna arrangement (antenna array) with the N complexly weighted transmit signals in order that the radio station emits at least one directional radio signal (S), having a modulation stage (MOD), in which, in the baseband or IF position, the modulation and at least a portion of the complex weighting of the transmit signals is performed, **characterized in that** the radio station emits at least two modulated radio signals (S, S') isochronously in different directions (Θ, Θ') on one carrier frequency (fc), the fixed radio station (BTSm) contains a time-division multiplex stage (MUX) which is connected upstream from the modulation stage (MOD) and which supplies the latter, for the purpose of modulation, with at least two digital useful signals (S[t], S'[t]) or modulating signals (φ, φ') derived therefrom, and the fixed radio station (BTSm) contains N demultiplex stages (DEMUX) and N adders, which are connected downstream from the modulation stage (MOD), so that there are generated for the N transmit branches (1, ..., N) N transmit signals which respectively correspond to a total signal which contains at least two complexly weighted partial signals (f1 and f1').

2. Radio station (BTS, BTSm; MS) according to Claim 1, **characterized in that** the radio station contains a control circuit (CTR) which is connected to the modulation stage (MOD) and controls the latter, for the purpose of complexly weighting the N transmit signals (f1, ..., fN), **in that**, for a modulating signal (b[s] ) with which the modulation stage (MOD) modulates the N transmit signals, it inputs N phase shifts (Φ1, ..., ΦN) and/or N amplitude weightings (a1, ..., aN).

3. Radio station (BTS) according to Claim 2, **characterized in that** the modulating signal defines the characteristic of a phase angle (φ[S]), the modulation stage (MOD) branches the modulating signal to the N transmit branches (1, 2, ..., N), and, for each of the transmit branches, within the modulation stage (MOD), the control circuit (CTR) controls a change of the phase angle (φ[S]) by one of the N input phase shifts ([Φ1, ..., ΦN]), in order that the radio station (BTS) emits an angle-modulated radio signal (S) in one direction (R).

4. Radio station (BTS) according to Claim 2, **characterized in that** the modulating signal defines the characteristic of an amplitude, the modulating stage branches the modulating signal to the N transmit branches, and, for each of the transmit branches, within the modulation stage, the control circuit controls a weighting of the amplitude with one of the N input amplitude weightings, in order that the radio station emits an amplitude-modulated radio signal in one direction.

5. Radio station (BTS) according to either of Claims 3 or 4, **characterized in that** the modulation stage (MOD) contains a digital signal processor (DSP) which is connected to the control circuit (CTR) and which, for each of the N transmit branches (1, ..., N), effects a binary addition of one of the N phase shifts ($\varphi1$, ..., $\Phi N$) to the phase angle ($\varphi[s]$) and which effects weighting of the amplitude through bit-shifting with one of the N amplitude weightings.

6. Radio station (BTS) according to Claim 2, **characterized in that** the modulation stage (MOD) derives the modulating signal ($\varphi[s]$) from a TDMA useful signal (S[t]) which has K time slots (T1, T2, ...), and, for each of the time slots (T1, T2, ...), the control circuit (CTR) inputs the N phase shifts ($\Phi1$, ..., $\Phi N$) and/or the N amplitude weightings (a1, ..., aN) in such a way that the radio station emits a TDMA radio signal (S) in a direction (R) which varies from one time slot to another.

7. Radio station (BTSm) according to Claim 1, **characterized in that**, for the purpose of establishing a directional radio connection with another radio station (MSO), the control circuit (CTR) controls the complex weighting in such a way that the antenna arrangement transmits with an omnidirectional characteristic.

8. Radio station (BTS) according to Claim 1, **characterized by** a carrier-frequency generator (GEN) which is connected to the N RF transmit stages (TX) via such a distribution network that equalizes different signal transit times for a clock-synchronized and in-phase carrier-frequency supply.

## Revendications

1. Station de radio (BTS, BTSm, MS) pour un système de téléphonie mobile SDMA qui comprend, pour la production de N signaux d'émission pondérés de manière complexes, N circuits émetteurs (1, 2, ..., N ; N étant un nombre naturel) avec N étages d'émission de radiofrequénce (TX), qui alimentent N éléments d'antenne (A1, ... AN) d'un dispositif d'antenne (réseau d'antennes) avec les N signaux d'émissions pondérés de manière complexe, afin que la station de radio émette au moins un signal radio (S) de manière orientée, avec un étage de modulation (MOD) dans lequel, en bande de base ou en ZF, la modulation et au moins une partie de la pondération complexe des signaux d'émission est réalisée, **caractérisée en ce que** la station de radio émet au moins deux signaux de radio modulés (S, S') simultanément sur une fréquence porteuse (fc) dans des directions différentes ($\theta$, $\theta'$), **en ce que** la station de radio fixe (BTSm) comprend un étage de multiplexage temporel (MUX) branché en amont de l'étage de modulation (MOD) et qui alimente celui-ci, pour la modulation, avec deux signaux utiles numériques (S[t], S'[t]) ou des signaux modulants ($\varphi$, $\varphi'$) qui en sont dérivés, et **en ce que** la station de radio fixe (BTSm) comprend N étages de démultiplexage (DEMUX) et N additionneurs branchés en aval de l'étage de modulation (MOD), de telle sorte que, pour les N circuits émetteurs (1, ..., N), N signaux d'émission soient générés, qui correspondent chacun à un signal de somme qui comprend au moins deux signaux partiels pondérés de manière complexe (f1 + f1').

2. Station de radio (BTS, BTSm, MS) selon la revendication 1, **caractérisée en ce que** la station de radio comprend un circuit de commande (CTR) relié à l'étage de modulation (MOD) et qui contrôle celui-ci pour la pondération complexe des N signaux d'émission (f1, ..., fN) en déterminant, pour un signal modulant (b[s]), que l'étage de modulation (MOD) applique aux N signaux d'émission, N déphasages ($\Phi1$, ..., $\Phi N$) et/ou N pondérations d'amplitude (a1, ..., aN).

3. Station de radio (BTS) selon la revendication 1, **caractérisée en ce que** le signal modulant donne le tracé d'un angle de phase ($\varphi[S]$), **en ce que** l'étage de modulation (MOD) répartit le signal modulant sur les N circuits émetteurs (1, 2, ..., N) et **en ce que** le circuit de commande (CTR) contrôle, pour chacun des circuits émetteurs de l'étage de modulation (MOD), une variation de l'angle de phase ($\varphi[S]$) et un des N déphasages prédéterminés ([$\Phi1$, ..., $\Phi N$]), afin que la station de radio (BTS) émette un signal radio modulé angulairement (S) dans une direction (R).

4. Station de radio (BTS) selon la revendication 2, **caractérisée en ce que** le signal modulant donne le tracé d'une amplitude, **en ce que** l'étage de modulation répartit le signal modulant sur les N circuits émetteurs et **en ce que** le circuit de commande contrôle, pour chacun des circuits émetteurs de l'étage de modulation, une pondération de l'amplitude avec une des pondérations prédéterminées de l'amplitude, afin que la station de radio émette un signal radio à amplitude modulée dans une direction.

**5.**   Station de radio (BTS) selon la revendication 3 ou 4, **caractérisée en ce que** l'étage de modulation (MOD) comprend un processeur numérique de signaux (DSP) relié au circuit de commande (CTR) et qui, pour chacun des N circuits émetteurs (1, ..., N) ajoute binairement à l'angle de phase ($\varphi$[S]) un des N déphasages ([$\Phi$1, ..., $\Phi$N]) ou qui pondère l'amplitude, par un décalage des bits, avec une des N pondérations de l'amplitude.

**6.**   Station de radio (BTS) selon la revendication 2, **caractérisée en ce que** l'étage de modulation (MOD) détermine le signal modulant ($\varphi$[S]) à partir d'un signal utile (S[t]) qui comprend K créneaux temporels (T1, T2, ...) et ce que le circuit de commande (CTR) détermine, pour chacun des créneaux temporels, les N déphasages ($\Phi$1, ..., $\Phi$N) et/ou les N pondérations d'amplitude (a1, ..., aN), de telle sorte que la station de radio émette un signal radio TDMA (S) dans une direction (R) variable d'un créneau temporel à l'autre.

**7.**   Station de radio (BTSm) selon la revendication 1, **caractérisée en ce que** le circuit de commande (CTR) contrôle la pondération complexe, pour l'établissement d'une liaison radio orientée avec une autre station de radio (MSO), de telle sorte que le dispositif d'antenne émette avec une caractéristique de faisceau omnidirectionnelle.

**8.**   Station de radio (BTS) selon la revendication 1, **caractérisée par** un générateur de fréquence porteuse (GEN) relié avec les N étages d'émission de radiofrequénce (TX) par l'intermédiaire d'un tel réseau de répartition, qui compense les différents temps de propagation du signal pour une alimentation synchrone et en phase de la fréquence porteuse.

FIG.1

FIG. 2

FIG.3

FIG.4

MRS

FIG.5

EP 0 696 112 B1

FIG.6